# EUROPEAN PATENT APPLICATION

(11) **EP 2 749 372 A1**
(43) Date of publication of application: **02.07.2014**
(21) Application number: 13162048.6
(22) Date of filing: 03.04.2013
(51) Int. Cl.: B23K 9/09, B23K 9/095, B23K 9/10, B23K 9/173

(54) **Power supply device for arc welding, arc welding system, and control method of power supply device for arc welding**

(30) Priority: 20.12.2012 JP 2012278698
(71) Applicant: Kabushiki Kaisha Yaskawa Denki, Kitakyushu-shi, Fukuoka 806-0004 (JP)
(72) Inventor: Murakami, Masafumi, Kitakyushu-shi, Fukuoka 806-0004 (JP); Hirayama, Takahide, Kitakyushu-shi, Fukuoka 806-0004 (JP)
(74) Representative: Grünecker, Kinkeldey, Stockmair & Schwanhäusser

(57) **Abstract**

According to the present application, a power supply device for arc welding (30) includes a constrained short-circuit opening unit (34) and a reexecuting unit (37). The constrained short-circuit opening unit (34) reduces, when a change amount of a welding voltage becomes not less than a predetermined threshold while raising a welding current between a consumable electrode and a workpiece (W), the welding current for a predetermined time interval to execute a constrained short-circuit opening process for opening the short-circuit state. The reexecuting unit (37) makes the constrained short-circuit opening unit (34) reexecute the constrained short-circuit opening process after the constrained short-circuit opening process is executed.

## Description

### FIELD

The embodiment discussed herein is directed to a power supply device for arc welding, an arc welding system, and a control method of the power supply device for arc welding.

### BACKGROUND

There is known a conventional arc welding system that generates an electric arc between a consumable electrode and a preform (workpiece) to perform welding on the preform. Just before a time at which short circuit is opened and that is determined on the basis of a change amount of a welding voltage, the arc welding system temporarily reduces a welding current that is uprising at a predetermined rate, and mildly thermally cuts a constricted part of droplet that is formed at the leading end of the consumable electrode.

In the arc welding system that simultaneously welds one workpiece by using welding robots and power supply devices for arc welding, there is known a case where noise is overlapped on a welding voltage of the one power supply device for arc welding due to a switching operation of the other power supply device for arc welding.

As described above, when noise is overlapped on a welding voltage, a change amount of the welding voltage increases similarly to a case where a constricted part is generated on a droplet. For this reason, a case is considered where the conventional arc welding system misdetects noise as a constricted part of a droplet to perform the above mild thermal cutting process, and then, when the constricted part is actually generated on the droplet, does not perform the mild thermal cutting process so as to generate spatters scattering the droplet.

There is known a method for inhibiting the detection of the constricted part of the droplet for a certain duration in order to prevent the detection of the noise.

The conventional technique has been known as disclosed in, for example, Japanese Laid-open Patent Publication No. 2007-245239. According to the arc welding system, noise overlapped on a welding voltage is not detected within an inhibition period in which a constricted part is not detected.

In the arc welding system disclosed in Japanese Laid-open Patent Publication No. 2007-245239, the detection of noise can be prevented within only a predetermined time interval and thus, when noise is overlapped on a welding voltage at a different time, the noise may be detected.
For this reason, the arc welding system disclosed in Japanese Laid-open Patent Publication No. 2007-245239 is insufficient as a system for suppressing the generation of spatters.

The present invention has been achieved in view of the above problems, and an object of the invention is to provide a power supply device for arc welding, an arc welding system, and a control method of the power supply device for arc welding that can be used for suppressing the generation of spatters even if noise exists.

### SUMMARY

A power supply device for arc welding according to an aspect of an embodiment includes a constrained short-circuit opening unit and a reexecuting unit, and performs welding on a workpiece while repeatedly changing a short-circuit state between a consumable electrode and the workpiece and an arc state where an electric arc exists between the consumable electrode and the workpiece. The constrained short-circuit opening unit reduces, when a change amount of a welding voltage becomes not less than a predetermined threshold while raising a welding current between the consumable electrode and the workpiece in the short-circuit state, the welding current for a predetermined time interval to execute a constrained short-circuit opening process for opening the short-circuit state. The reexecuting unit makes the constrained short-circuit opening unit reexecute the constrained short-circuit opening process after the constrained short-circuit opening process is executed.

According to an aspect of an embodiment, it is possible to provide a power supply device for arc welding that can suppress the generation of spatters even if noise exists.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a diagram explaining an arc welding system according to an embodiment;

FIG. 2 is a block diagram illustrating the configuration of the arc welding system according to the embodiment;

FIG. 3 is an outside schematic diagram illustrating a part of the arc welding system according to the embodiment;

FIG. 4 is a block diagram illustrating the configuration of a power supply device for arc welding according to the embodiment;

FIGS. 5 and 6 are timing charts illustrating an example of a constrained short-circuit opening process that is performed by the power supply device for arc welding according to the embodiment; and

FIG. 7 is a flowchart illustrating an example of the constrained short-circuit opening process that is performed by the power supply device for arc welding according to the embodiment.

### DESCRIPTION OF EMBODIMENT

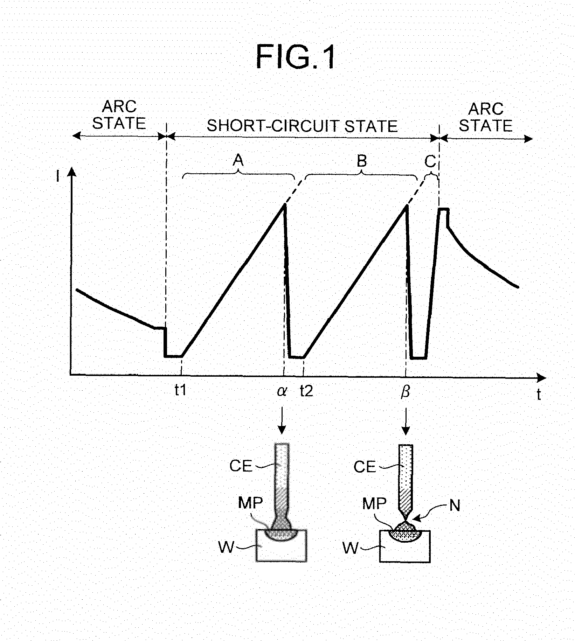

Hereinafter, a power supply device for arc welding, an arc welding system, and a control method of the power supply device for arc welding according to an embodiment of the present disclosure will be explained in detail with reference to the accompanying drawings. In addition, the embodiment disclosed below is not intended to limit the present invention. First, the brief of the arc welding system according to the embodiment will be explained with reference to FIG. 1.

FIG. 1 is a diagram explaining the arc welding system according to the embodiment. Herein, a case will be explained where a constricted part of a droplet is detected at a time β after noise is detected at a time α.

The upper portion of FIG. 1 schematically illustrates the change of a welding current I to an elapsed time t in the arc welding system according to the embodiment. The lower portion of FIG. 1 schematically illustrates, at the times α and β, the outside of a droplet that includes the end portion of a consumable electrode CE and a workpiece W. In FIG. 1, the passage of time and the change of a welding current are schematically illustrated as an example, and do not necessarily correspond to measured values.

The arc welding system according to the embodiment fuses the bottom end of the consumable electrode CE by using arc heat in an arc state where an electric arc exists between the consumable electrode CE and a molten pool MP formed on the workpiece W. Then, the bottom end of the consumable electrode CE approximates or touches the molten pool MP and thus the consumable electrode CE and the molten pool MP are electrically connected. In this way, the arc welding system according to the embodiment changes from an arc state to a short-circuit state. In the arc welding system according to the embodiment, the change from the arc state to the short-circuit state is determined by, for example, whether the welding voltage becomes not more than a predetermined threshold value.

The arc welding system according to the embodiment executes a constrained short-circuit opening process in an interval A (see FIG. 1) after its state is changed to the short-circuit state. Herein, the "constrained short-circuit opening process" means a process for stopping the rise of the welding current I that is rising at a predetermined rate so as to temporarily reduce it and for mildly thermally cutting a constricted part N of the droplet that is formed on the leading end of the consumable electrode CE.

In other words, the arc welding system according to the embodiment monitors a welding voltage at a predetermined time interval while raising the welding current I at a predetermined rate from a time t1 illustrated in FIG. 1. Then, the arc welding system according to the embodiment stops the rise of the welding current I at the time α, at which a change amount of the welding voltage becomes not less than a predetermined threshold value, and immediately reduces the welding current I temporarily.

As described above, the arc welding system according to the embodiment executes, in the interval A illustrated in FIG. 1, the constrained short-circuit opening process for detecting noise overlapped on the welding voltage at the time α to temporarily reduce the welding current I. However, the short-circuit state where the consumable electrode CE and the molten pool MP on the workpiece W are electrically connected is still being continued.

The arc welding system according to the embodiment reexecutes the constrained short-circuit opening process in an interval B (see FIG. 1) after executing the constrained short-circuit opening process in the interval A. In other words, the arc welding system according to the embodiment is temporarily reducing the welding current from the time α to a time t2, but is monitoring the welding voltage at the predetermined time interval while raising the welding current at the predetermined rate from the time t2. Then, the arc welding system stops the rise of the welding current I at the time β, at which the change amount of the welding voltage becomes not less than the predetermined threshold value, and immediately reduces the welding current I temporarily.

The constrained short-circuit opening process executed in the interval B described above is similar to the constrained short-circuit opening process executed in the interval A. In other words, the arc welding system according to the embodiment reexecutes the constrained short-circuit opening process in the short-circuit state.

The arc welding system according to the embodiment executes a process for raising the welding current in an interval C (see FIG. 1) after executing the constrained short-circuit opening process in the interval B. Then, when the welding voltage exceeds the predetermined threshold value, the arc welding system according to the embodiment changes from the short-circuit state to the arc state and terminates a series of short-circuit opening processes.

The conventional arc welding system executes the constrained short-circuit opening process in the interval A illustrated in FIG. 1, and then executes the short-circuit opening process in the interval C, in which a welding current is again raised unconditionally, without providing a constraint to a change amount of a welding voltage. Therefore, when noise is detected instead of the constricted part N of a droplet in the constrained short-circuit opening process in the interval A, a trouble caused by spatters is concerned in the conventional arc welding system because the welding current is further raised upon opening of short circuit.

On the contrary, it has been explained that the arc welding system according to the embodiment provides the interval B, in which the same constrained short-circuit opening process as that of the interval A is executed, between the interval A in which the constrained short-circuit opening process is executed and the interval C in which the short-circuit opening process is executed, and thus reexecutes the constrained short-circuit opening process. When the constrained short-circuit opening process in the interval B is reexecuted after the constrained short-circuit opening process in the interval A is executed, the arc welding system according to the embodiment can detect, in the interval B, the constricted part N formed on the droplet between the consumable electrode CE and the molten pool MP even after noise is detected in the interval A. For this reason, the generation of spatters upon opening of short circuit can be suppressed.

In the arc welding system according to the embodiment, the number of reexecutions by which the constrained short-circuit opening process is reexecuted between the interval A and the interval C may be set to one as illustrated in FIG. 1, or may be set to two or more by using two or more as an upper limit. Moreover, the number of reexecutions may be set unlimitedly in such a manner that the constrained short-circuit opening process is repeatedly reexecuted until its state is changed from the short-circuit state to the arc state. When its state is changed to the arc state during executing the constrained short-circuit opening process, the short-circuit opening process in the interval C may be omitted.

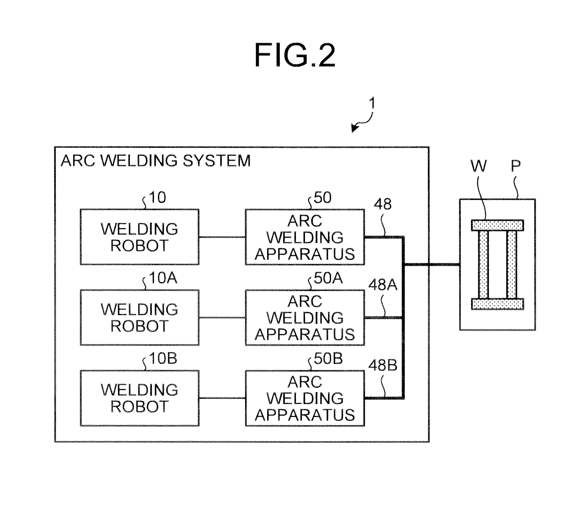

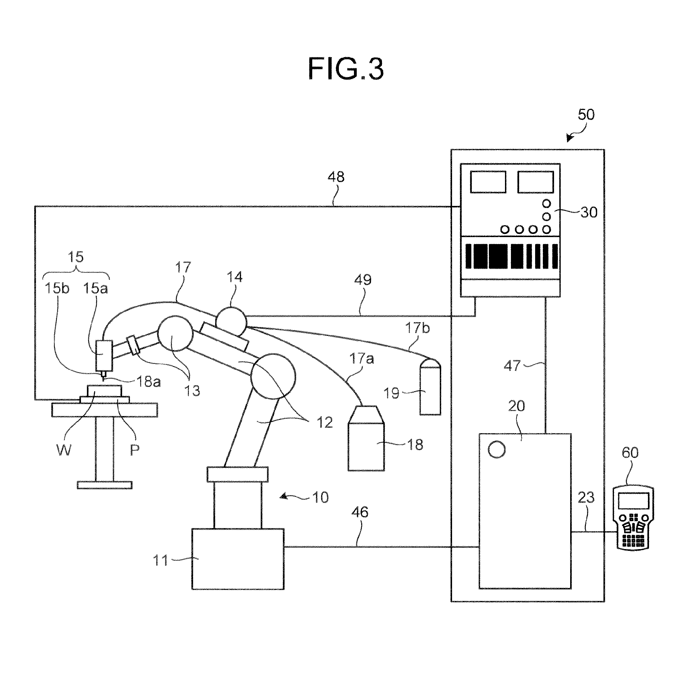

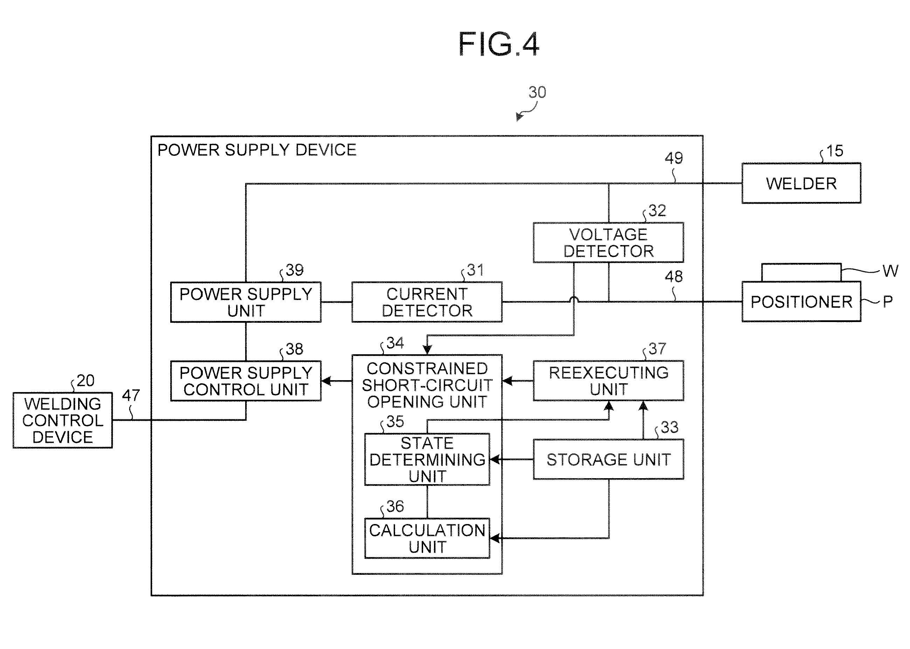

Next, the configuration of a power supply device for arc welding (hereinafter, simply "power supply device") according to the embodiment and an arc welding system that includes the power supply device according to the embodiment will be explained with reference to FIGS. 2 to 4. FIG. 2 is a block diagram illustrating the configuration of an arc welding system 1 according to the embodiment. FIG. 3 is an outside schematic diagram illustrating the configuration of the arc welding system 1 according to the embodiment. FIG. 4 is a detailed block diagram illustrating the power supply device of the arc welding system 1 according to the embodiment.

As illustrated in FIG. 2, the arc welding system 1 according to the embodiment includes welding robots 10, 10A, and 10B and arc welding apparatuses 50, 50A, and 50B. The arc welding apparatuses 50, 50A, and 50B simultaneously perform welding on the same workpiece W on a positioner P by respectively activating the welding robots 10, 10A, and 10B. The positioner P includes one or more actuators that change the position and posture of the workpiece W so that the welding robots 10, 10A, and 10B easily weld the workpiece W.

In the arc welding system 1 according to the embodiment, parts of the lines close to the positioner P, among power supply lines (hereinafter, "cables") 48, 48A, and 48B that link the arc welding apparatuses 50, 50A, and 50B to the positioner P, are packed up as one power cable. When the parts of the cables 48, 48A, and 48B are packed up as one cable, this contributes to the prevention of breaking of wire, space-saving, and the like, for example. On the other hand, this leads to easily overlap noises caused by the switching operations of the other arc welding apparatuses 50, 50A, and 50B on each other. However, because the arc welding system 1 according to the embodiment has the configuration that the constrained short-circuit opening process is reexecuted, the generation of spatters can be suppressed even if there are noises coming from the arc welding apparatuses 50, 50A, and 50B.

The welding robots 10A and 10B and the arc welding apparatuses 50A and 50B illustrated in FIG. 2 have the same configurations as those of the welding robot 10 and the arc welding apparatus 50. Therefore, when later explaining the arc welding system 1 according to the embodiment, explanations on the welding robots 10A and 10B and the arc welding apparatuses 50A and 50B are omitted. The configurations of the welding robots 10A and 10B and the arc welding apparatuses 50A and 50B in the arc welding system 1 illustrated in FIG. 2 are not illustrated in FIG. 3.

Next, the arc welding apparatus 50 of the arc welding system 1 according to the embodiment will be explained. As illustrated in FIG. 3, the arc welding apparatus 50 includes a welding control device 20 and a power supply device 30. The welding control device 20 controls the welding robot 10 and the positioner P to perform arc welding on the workpiece W on the positioner P.

First, the configuration of the welding robot 10 will be explained. As illustrated in FIG. 3, the welding robot 10 is fixed to a floor via a base part 11. The welding robot 10 has a plurality of robot arms 12. Each of the robot arms 12 is connected to the other robot arm 12 via a joint 13.

Among the robot arms 12 that are interconnected via the joints 13, the bottom end of the robot arm 12 closest to the base part 11 is fixed to the base part 11 and a welder 15 is attached to the leading end of the robot arm 12 farthest from the base part 11. Each of the joints 13 is driven by an actuator such as a servo motor, and thus can variously change the position and posture of the welder 15.

A sending unit 14 is placed at a predetermined position of the robot arm 12. The sending unit 14 sends out a welding wire 18a stored in a welding wire can 18 to the welder 15 via a torch cable 17. The torch cable 17 contains a conduit cable 17a. The welding wire 18a that is the consumable electrode CE is sent out to the welder 15 through the conduit cable 17a.

The sending unit 14 supplies shielding gas supplied from a gas cylinder 19 to the welder 15 via the torch cable 17. The torch cable 17 further contains a gas supply hose 17b. The shielding gas supplied from the gas cylinder 19 is supplied to the welder 15 through the gas supply hose 17b.

The sending unit 14 is provided with a sending speed detector that detects a sending speed of the welding wire 18a with respect to the welder 15. The sending speed information of the welding wire 18a detected by the sending speed detectors is output to the power supply device 30. The welding control device 20 also controls a supply speed of the welding wire 18a by the sending unit 14 via the power supply device 30.

The welder 15 includes a welding torch 15a and a contact tip 15b. The welding torch 15a has a hollow structure in order to insert thereinto the torch cable 17. The contact tip 15b is attached to the leading end of the welding torch 15a.

The welding wire 18a is sent out from the leading end of the contact tip 15b via the through-hole of the contact tip 15b. Moreover, the contact tip 15b is connected to a cable 49. Welding power for arc welding is supplied from the power supply device 30 to the contact tip 15b via the cable 49.

The shielding gas is supplied into the welding torch 15a from the opening of the leading end of the gas supply hose 17b. The supplied shielding gas is discharged from the leading end of the welding torch 15a to shield an electric arc generated from the leading end of the welding wire 18a from an atmosphere.

Next, the configuration of an operating device 60 will be explained. The operating device 60 is utilized in, for example, a case where an operator programs the work description of arc welding and a case where the operator monitors the state of arc welding. The operating device 60 transmits weld setting information to the welding control device 20 via a communication network 23. A general network such as wired local area network (LAN) and wireless LAN can be used as the communication network 23. Moreover, the welding control device 20 may generate weld setting information on the basis of information from the operating device 60 without transmitting weld setting information from the operating device 60 to the welding control device 20.

Next, the configuration of the welding control device 20 will be explained. As illustrated in FIG. 3, the welding control device 20 controls the welding robot 10 and the power supply device 30 via control cables 46 and 47 on the basis of the weld setting information acquired from the operating device 60 by way of the communication network 23, and thereby performs arc welding on the workpiece W. The weld setting information includes robot control information and power supply control information.

More specifically, the welding control device 20 controls the welding robot 10 in accordance with the robot control information of the weld setting information, and changes the position and posture of the welder 15 that is attached to the leading-end robot arm 12. The robot control information includes scheduled line information for welding, welding speed information, operation information of the positioner P, sending speed information of the welding wire 18a, and the like.

The scheduled line information for welding is information that indicates an orbit of the welder 15. In other words, the scheduled line information for welding is information that indicates the change of a position of the welder 15 and the change of a posture of the welder 15 with respect to the workpiece W. The scheduled line information for welding is output to the welding robot 10 as coordinate information and posture information of the moving position of the welder 15. The welding speed information is information that indicates arc welding speed (travel distance of the welder 15 per unit time) by the welder 15. The welding speed information is output to the welding robot 10 as a welding speed reference value.

The welding control device 20 controls the power supply device 30 in accordance with the robot control information of the weld setting information, and thereby supplies the welding wire 18a from the sending unit 14 and also supplies welding power from the power supply device 30 to the welder 15 in accordance with the power supply control information so as to make the welder 15 perform arc welding. The power supply control information includes a welding voltage reference value, a welding current reference value, a welding start reference, a welding stop reference, and the like.

As described above, the welding control device 20 controls the power supply device 30 while changing the position and posture of the welder 15, and sends the welding wire 18a from the sending unit 14 to the welder 15 and also supplies welding power from the power supply device 30 to the contact tip 15b. As a result, the arc welding system 1 according to the embodiment generates an electric arc from the leading end of the welding wire 18a to weld the workpiece W.

Next, the configuration of the power supply device 30 will be explained. The power supply device 30 supplies welding power to the welder 15 via the cable 49, and thereby makes a welding current flow between the contact tip 15b and the positioner P connected to the cable 48 and generates an electric arc from the leading end of the welding wire 18a. As illustrated in FIG. 4, the power supply device 30 includes a current detector 31, a voltage detector 32, a storage unit 33, a constrained short-circuit opening unit 34, a reexecuting unit 37, a power supply control unit 38, and a power supply unit 39.

As illustrated in FIG. 4, the current detector 31 detects a welding current on the basis of a current flowing into the cable 48 connected to the positioner P placing thereon the workpiece W. The welding current information detected by the current detector 31 is output to the welding control device 20 via the control cable 47.

On the other hand, the voltage detector 32 detects a welding voltage on the basis of a voltage between the cable 48 and the cable 49. The welding voltage information detected by the voltage detector 32 is output to a state determining unit 35.

Next, the configuration of the storage unit 33 will be explained. The storage unit 33 is constituted by a storage device such as a nonvolatile memory and a hard disk drive. The storage unit 33 may include a volatile memory that temporarily stores therein data. For example, various parameters such as a voltage parameter Vp, a current change amount parameter ΔIp, and a voltage change amount parameter ΔVp to be described later are stored in the storage unit 33.

Next, the configuration of the constrained short-circuit opening unit 34 will be explained. As illustrated in FIG. 4, the constrained short-circuit opening unit 34 includes the state determining unit 35 and a calculation unit 36. The state determining unit 35 compares the welding voltage from the voltage detector 32 with the voltage parameter Vp previously stored in the storage unit 33 to determine whether the arc welding apparatus 50 that includes the power supply device 30 is in the short-circuit state or in the arc state.

More specifically, when the welding voltage from the voltage detector 32 is higher than the voltage parameter Vp, for example, the state determining unit 35 determines that the arc welding apparatus 50 that includes the power supply device 30 according to the embodiment is in the arc state. On the other hand, when the welding voltage from the voltage detector 32 is not more than the voltage parameter Vp, the state determining unit 35 determines that the arc welding apparatus 50 that includes the power supply device 30 according to the embodiment is in the short-circuit state.

Herein, the voltage parameter Vp is a threshold as a criterion for determining whether the arc welding apparatus 50 that includes the power supply device 30 according to the embodiment is in the arc state or in the short-circuit state. The voltage parameter Vp is previously set, for example, in accordance with the configuration and welding condition of the arc welding apparatus 50 that includes the power supply device 30 according to the embodiment. Moreover, the voltage parameter Vp stored in the storage unit 33 is not limited to one. Therefore, the number of the voltage parameters may be two or more.

When the voltage parameters Vp are set, the state determining unit 35 may perform state determination on the basis of different thresholds in a case where it is determined that its state is changed from the short-circuit state to the arc state and a case where it is determined that its state is changed from the arc state to the short-circuit state. By employing this configuration, even if the arc welding apparatus 50 that includes the power supply device 30 according to the embodiment largely fluctuates a welding voltage between the arc state and the short-circuit state, for example, the state determination can be speedily performed. For this reason, the power supply control unit 38 can change a control mode of the power supply unit 39 without delay.

When the state determining unit 35 determines that the arc welding apparatus 50 that includes the power supply device 30 according to the embodiment is in the short-circuit state, the constrained short-circuit opening unit 34 makes the power supply control unit 38 execute the constrained short-circuit opening process. More specifically, when the state determining unit 35 determines that it is in the short-circuit state, the constrained short-circuit opening unit 34 outputs to the power supply control unit 38 a welding current reference for raising a welding current on the basis of the current change amount parameter ΔIp previously stored in the storage unit 33.

Herein, the current change amount parameter ΔIp is a base value for making the constrained short-circuit opening unit 34 instruct the power supply control unit 38 on a ratio raising a welding current, in order to execute the constrained short-circuit opening process. The current change amount parameter ΔIp is previously set, for example, in accordance with the configuration and welding condition of the arc welding apparatus 50 that includes the power supply device 30 according to the embodiment.

On the other hand, the calculation unit 36 computes a change amount of the welding voltage on the basis of the welding voltage from the voltage detector 32. For example, the calculation unit 36 may compute a change amount dV/dt of a welding voltage per unit time as a change amount of the welding voltage, or may compute a difference of welding voltages detected by the voltage detector 32 every predetermined interval as a change amount of the welding voltage.

Then, the constrained short-circuit opening unit 34 compares the change amount of the welding voltage computed by the calculation unit 36 with the voltage change amount parameter ΔVp previously stored in the storage unit 33. Then, when the change amount of the welding voltage becomes not less than the voltage change amount parameter ΔVp, the constrained short-circuit opening unit 34 outputs a constraint reference to the power supply control unit 38 to temporarily reduce the welding current.

Herein, the voltage change amount parameter ΔVp is a threshold as a criterion for outputting a constraint reference for temporarily reducing the welding current rising at a predetermined rate from the constrained short-circuit opening unit 34 to the power supply control unit 38. The voltage change amount parameter ΔVp is previously set in accordance with the configuration and welding condition of the arc welding apparatus 50 that includes the power supply device 30 according to the embodiment.

The reexecuting unit 37 outputs a reexecution reference to the constrained short-circuit opening unit 34 on the basis of the state determination from the state determining unit 35. More specifically, when the state determining unit 35 again determines that it is in the short-circuit state after performing a series of constrained short-circuit opening processes based on the welding current reference and the constraint reference output to the power supply control unit 38 from the constrained short-circuit opening unit 34, the reexecuting unit 37 outputs the reexecution reference to the constrained short-circuit opening unit 34. The constrained short-circuit opening unit 34 receives the reexecution reference, and then makes the power supply control unit 38 reexecute the constrained short-circuit opening process until the number of reexecutions arrives at the upper limit of the number of reexecutions stored in the storage unit 33 or until the arc welding apparatus 50 that includes the power supply device 30 according to the embodiment is changed from the short-circuit state to the arc state.

The power supply control unit 38 controls the power supply unit 39 in accordance with the request from the welding control device 20. For example, upon receiving a welding start reference from the welding control device 20, the power supply control unit 38 controls the power supply unit 39 to perform the supply of power from the power supply unit 39 to the welder 15. Moreover, upon receiving a welding stop reference from the welding control device 20, the power supply control unit 38 controls the power supply unit 39 to stop the supply of power from the power supply unit 39 to the welder 15.

Upon receiving a welding current reference from the constrained short-circuit opening unit 34, the power supply control unit 38 controls the power supply unit 39 to raise the welding current at a predetermined change amount based on the current change amount parameter ΔIp. Moreover, upon receiving a constraint reference from the constrained short-circuit opening unit 34, the power supply control unit 38 temporarily blocks the supply of power from the power supply unit 39 to the welder 15 in accordance with the switching operation of the power supply unit 39, for example, and temporarily reduces the welding current.

Then, the power supply unit 39 supplies welding power to the welder 15 by way of the power cable 49 on the basis of the reference from the power supply control unit 38.

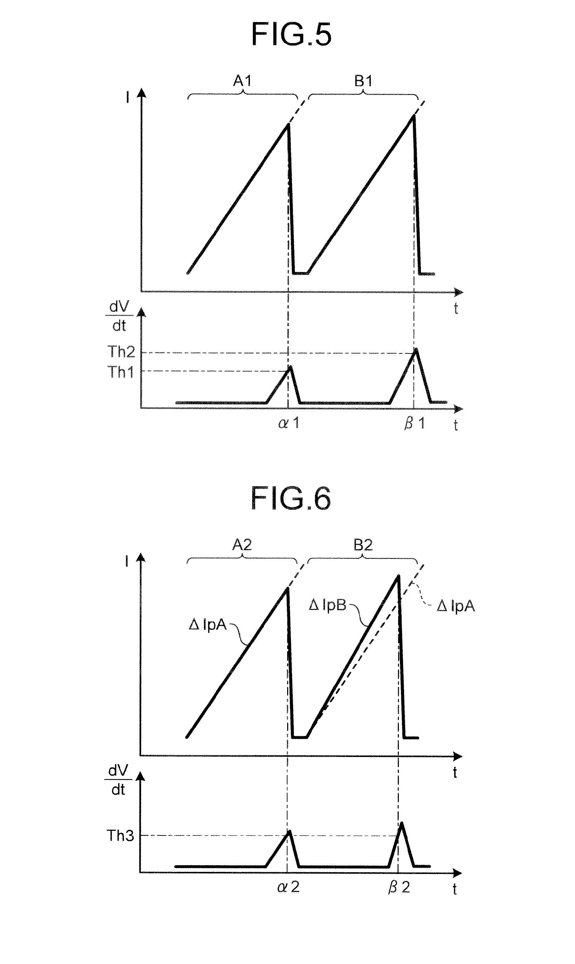

Next, a specific example of the constrained short-circuit opening process executed by the power supply device 30 that includes the constrained short-circuit opening unit 34 and the reexecuting unit 37 will be explained with reference to FIGS. 5 and 6. FIGS. 5 and 6 are timing charts illustrating an example of the constrained short-circuit opening process executed by the power supply device 30 according to the embodiment. In FIGS. 5 and 6, their upper portions illustrate the welding current I detected by the current detector 31 with respect to a time t, and their lower portions illustrate the change amount dV/dt per unit time of the welding voltage computed by the calculation unit 36 with respect to the time t.

In FIG. 5, a case where noise is detected at a time α1 and then the constricted part N of a droplet is detected at a time β1 is illustrated. In FIG. 6, a case where noise is detected at a time α2 and then the constricted part N of a droplet is detected at a time β2 is illustrated. In FIGS. 5 and 6, the passage of time and the change of a welding current are schematically illustrated as an example, and thus do not necessarily correspond to measured values.

First, an example of the constrained short-circuit opening process executed by the power supply device 30 according to the embodiment will be explained with reference to FIG. 5. In the power supply device 30 of the arc welding apparatus 50 in which the state determining unit 35 determines that it is in the short-circuit state, the welding current reference is output from the constrained short-circuit opening unit 34 to the power supply control unit 38. As illustrated in FIG. 5, the welding current I is raised in an interval A1 at a predetermined change amount based on the current change amount parameter ΔIp.

On the other hand, the calculation unit 36 calculates the change amount dV/dt per unit time of the welding voltage detected by the voltage detector 32 at a predetermined time. Then, the constrained short-circuit opening unit 34 outputs the constraint reference to the power supply control unit 38 at the time α1 at which the dV/dt becomes not less than a first threshold Th1 based on the voltage change amount parameter ΔVp stored in the storage unit 33, and temporarily reduces the welding current I.

As described above, the constricted part N of a droplet is not detected but noise is detected at the time α1, and the arc welding apparatus 50 that includes the power supply device 30 according to the embodiment is still in the short-circuit state even after the interval A1 is passed. Therefore, the reexecuting unit 37 outputs the reexecution reference to the constrained short-circuit opening unit 34.

The constrained short-circuit opening unit 34 receives the reexecution reference from the reexecuting unit 37, and then outputs a welding current reference to the power supply control unit 38 and raises the welding current I at the same change amount as that of the interval A1 based on the current change amount parameter ΔIp in an interval B1. Moreover, in order to clarify a difference of a change amount of the welding current I between the interval A1 and the interval B1, the upper portion of FIG. 5 shows a change amount (inclination) of the welding current I in the interval A1 by using a broken line.

On the other hand, the constrained short-circuit opening unit 34 outputs the constraint reference to the power supply control unit 38 at the time β1 at which the dV/dt calculated by the calculation unit 36 becomes not less than a second threshold Th2 based on the voltage change amount parameter ΔVp stored in the storage unit 33, and temporarily reduces the welding current I. As a result, a series of constrained short-circuit opening processes based on the reexecution reference from the reexecuting unit 37 is terminated.

As described above, the threshold, which is set based on the voltage change amount parameter ΔVp and is compared with the dV/dt, may be changed every time the constrained short-circuit opening process is reexecuted in accordance with the output from the reexecuting unit 37.
At this time, when setting the voltage change amount parameter ΔVp so that a threshold is sequentially increased, for example, Th1<Th2 in the example of FIG. 5 every time the constrained short-circuit opening process is reexecuted, a possibility for detecting the constricted part N instead of noise increases with the reexecution of the constrained short-circuit opening process, for example. Therefore, the power supply device 30 according to the present embodiment can reduce the number of reexecutions by which the constrained short-circuit opening process is reexecuted and thus can suppress the change delay of the arc welding apparatus 50 that changes to the arc state.

Next, another example of the constrained short-circuit opening process executed by the power supply device 30 according to the embodiment will be explained with reference to FIG. 6. In the power supply device 30 of the arc welding apparatus 50 in which the state determining unit 35 determines that it is in the short-circuit state, a welding current reference is output from the constrained short-circuit opening unit 34 to the power supply control unit 38. As illustrated in FIG. 6, the welding current I is raised in an interval A2 at a change amount (inclination) ΔIpA based on the current change amount parameter ΔIp.

On the other hand, the constrained short-circuit opening unit 34 outputs the constraint reference to the power supply control unit 38 at the time α2 at which the dV/dt calculated by the calculation unit 36 becomes not less than a threshold Th3 based on the voltage change amount parameter ΔVp stored in the storage unit 33, and temporarily reduces the welding current I.

As described above, because noise is detected instead of the constricted part N of a droplet at the time α2 and the arc welding apparatus 50 that includes the power supply device 30 according to the embodiment is still in the short-circuit state, the reexecuting unit 37 outputs the reexecution reference to the constrained short-circuit opening unit 34.

The constrained short-circuit opening unit 34 receives the reexecution reference from the reexecuting unit 37, and controls the power supply control unit 38 to raise the welding current I in an interval B2 at a change amount ΔIpB based on the current change amount parameter ΔIp. Then, the constrained short-circuit opening unit 34 outputs the constraint reference to the power supply control unit 38 at the time β2 at which the dV/dt becomes not less than the threshold Th3 based on the voltage change amount parameter ΔVp, and temporarily reduces the welding current I. As a result, a series of constrained short-circuit opening processes based on the reexecution reference from the reexecuting unit 37 is terminated.

In order to clarify a difference of a change amount of the welding current I between the interval A2 and the interval B2, the upper portion of FIG. 6 shows the change amount (inclination) ΔIpA of the welding current I in the interval A2 by using a broken line, similarly to the upper portion of FIG. 5. In the power supply device 30 illustrated in FIG. 6, the current change amount parameter ΔIp is set so that the change amount ΔIpB of the welding current I in the interval B2 is higher than the change amount ΔIpA of the welding current I in the interval A2, that is to say, ΔIpA<ΔIpB.

As described above, when increasing a ratio raising the welding current I every time the constrained short-circuit opening process is reexecuted, the power supply device 30 according to the embodiment can speedily raise the welding current I temporarily reduced by the power supply control unit 38 in accordance with the constraint reference from the constrained short-circuit opening unit 34. By employing this configuration, it is possible to suppress the change delay to an arc state accompanied with temperature fall of the welding wire 18a.

In FIGS. 5 and 6, it has been explained that the power supply device 30 according to the embodiment changes one of the threshold for outputting the constraint reference and the ratio for raising the welding current I every time the constrained short-circuit opening process is reexecuted. However, the embodiment may have a configuration that both are simultaneously changed.

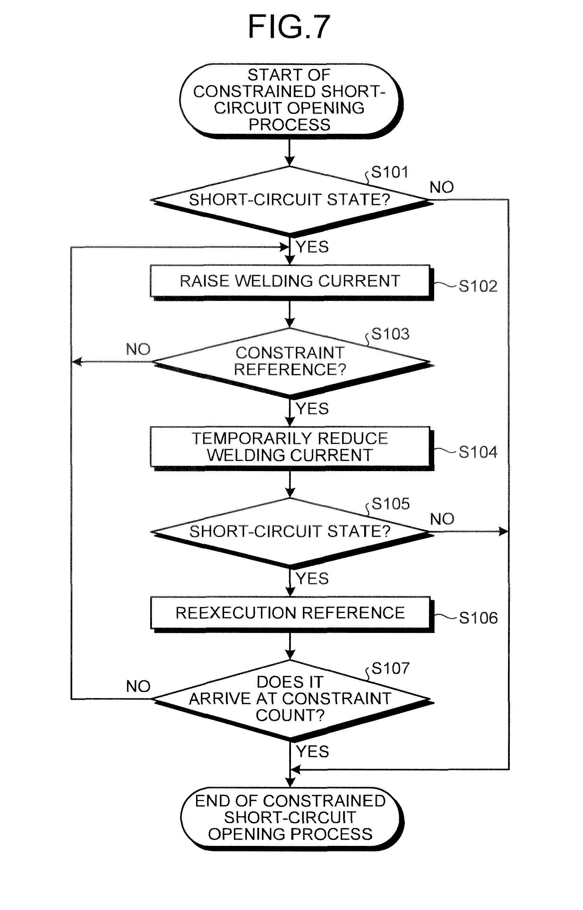

Next, the constrained short-circuit opening process executed by the power supply device 30 according to the embodiment will be specifically explained with reference to FIG. 7. FIG. 7 is a flowchart illustrating the procedures of the constrained short-circuit opening process executed by the power supply device 30 according to the embodiment.

As illustrated in FIG. 7, the state determining unit 35 compares the welding voltage detected by the voltage detector 32 with the voltage parameter Vp stored in the storage unit 33 and determines whether the arc welding apparatus 50 that includes the power supply device 30 according to the embodiment is in the short-circuit state (Step S101). Then, when it is determined that the arc welding apparatus 50 that includes the power supply device 30 according to the embodiment is not in the short-circuit state (Step S101: No), the power supply device 30 according to the embodiment terminates the constrained short-circuit opening process.

On the other hand, when the state determining unit 35 determines that the arc welding apparatus 50 that includes the power supply device 30 according to the embodiment is in the short-circuit state (Step S101: Yes), the constrained short-circuit opening unit 34 outputs the welding current reference to the power supply control unit 38 and raises the welding current I at a predetermined change amount based on the current change amount parameter ΔIp (Step S102).

On the other hand, the constrained short-circuit opening unit 34 determines whether a constraint reference is output on the basis of a result obtained by comparing a change amount of the welding voltage calculated by the calculation unit 36 with the threshold Th based on the voltage change amount parameter ΔVp (Step S103). When the calculated change amount of the welding voltage is less than the threshold Th based on the voltage change amount parameter ΔVp, the constrained short-circuit opening unit 34 does not output constraint reference (Step S103, No) and the power supply control unit 38 further raises the welding current I.

Then, when the calculated change amount of the welding voltage becomes not less than the threshold Th based on the voltage change amount parameter ΔVp and thus the constraint reference is output from the constrained short-circuit opening unit 34 to the power supply control unit 38 (Step S103: Yes), the power supply control unit 38 controls the power supply unit 39 to temporarily reduce the welding current I (Step S104). As a result, the first constrained short-circuit opening process is completed.

Then, when the state determining unit 35 determines that the arc welding apparatus 50 that includes the power supply device 30 according to the embodiment is not in the short-circuit state (Step S105: No), the power supply device 30 according to the embodiment terminates the constrained short-circuit opening process. On the other hand, in the arc welding apparatus 50 that includes the power supply device 30 according to the embodiment, when the state determining unit 35 determines that the short-circuit state is being continued (Step S105: Yes), the reexecuting unit 37 outputs a reexecution reference for reexecuting the constrained short-circuit opening process to the constrained short-circuit opening unit 34 (Step S106).

Next, when the reexecution reference is output from the reexecuting unit 37 to the constrained short-circuit opening unit 34, it is determined whether an output count of reexecution references from the reexecuting unit 37 arrives at a constraint count predetermined in the storage unit 33 (Step S107). Then, when the output count of the reexecution references does not arrive at the predetermined constraint count (Step S107: No), the constrained short-circuit opening unit 34 controls the power supply control unit 38 to again raise the welding current I (Step S102).

On the other hand, when the output count of the reexecution references from the reexecuting unit 37 arrives at the predetermined constraint count (Step S107: Yes), the power supply device 30 according to the embodiment terminates the constrained short-circuit opening process.

As described above, the power supply device 30 according to the embodiment can suppress the generation of spatters even if there are noises generated by switching operations in the power supply devices that constitute the arc welding apparatuses 50A and 50B illustrated in FIG. 2, for example.

The arc welding system 1 illustrated in FIG. 2 can have a configuration that the positioner P is not used if it is not necessary to change the position and posture of the workpiece W. In this case, one end obtained by packing up the cables 48, 48A, and 48B or parts of them as one power cable may be connected to the workpiece W in place of the positioner P. By employing this configuration, in order to weld the workpiece W placed on a pedestal in place of the positioner P, for example, the arc welding system 1 according to the embodiment can be used.

As described above, the arc welding system 1 has the configuration that the power supply device 30 includes the current detector 31 and the voltage detector 32. However, one or both of the current detector 31 and the voltage detector 32 may be provided in the welding control device 20. Moreover, it has been explained that the welding control device 20 and the power supply device 30 are segregated. However, the welding control device 20 and the power supply device 30 may be integrated with each other.

As described above, it has been explained that the welding robot 10 and the welding control device 20 are segregated. However, the welding robot 10 and the welding control device 20 may be integrated with each other. Moreover, the welding robot 10, the welding control device 20, and the power supply device 30 may be integrated with one another.

In the arc welding system 1, the welding control device 20, the power supply device 30, and the operating device 60 are individually provided for each of the arc welding apparatuses 50, 50A, and 50B. However, a part or the whole of them may be shared in the arc welding apparatuses 50, 50A, and 50B.

As described above, the arc welding system 1 is configured to simultaneously weld the same workpiece W by using the three arc welding apparatuses 50, 50A, and 50B. However, the number of the arc welding apparatuses 50 that constitute the arc welding system 1 is not limited to three. In other words, the arc welding system 1 may be configured to simultaneously weld the same workpiece W by using only the one arc welding apparatus 50, or two or four or more arc welding apparatuses.

In the power supply device 30, various settings such as the voltage parameter Vp, the voltage change amount parameter ΔVp, and the current change amount parameter ΔIp, which are stored in the storage unit 33, and the upper limit of the number of reexecutions of the constrained short-circuit opening process reexecuted by the output from the reexecuting unit 37 may be input or changed by operating the operating device 60. By employing this configuration, various settings can be easily changed by a field operator on the basis of a result welded by an actual machine, for example. Moreover, various settings described above may be input or changed by operating the welding control device 20 or the power supply device 30 instead of the operating device 60.

## Claims

1. A power supply device for arc welding (30) that performs welding on a workpiece while repeatedly changing a short-circuit state between a consumable electrode and the workpiece and an arc state where an electric arc exists between the consumable electrode and the workpiece, the power supply device for arc welding (30) comprising:
a constrained short-circuit opening unit (34) that reduces, when a change amount of a welding voltage becomes not less than a predetermined threshold while raising a welding current between the consumable electrode and the workpiece in the short-circuit state, the welding current for a predetermined time interval to execute a constrained short-circuit opening process for opening the short-circuit state; and
a reexecuting unit (37) that makes the constrained short-circuit opening unit (34) reexecute the constrained short-circuit opening process after the constrained short-circuit opening process is executed.

2. The power supply device for arc welding (30) according to claim 1, further comprising a state determining unit (35) that determines whether a current state is the short-circuit state or the arc state, wherein
the reexecuting unit (37) makes the constrained short-circuit opening unit (34) execute the constrained short-circuit opening process when the state determining unit (35) determines that the current state is the short-circuit state.

3. The power supply device for arc welding (30) according to claim 1 or 2, wherein the threshold increases every time the constrained short-circuit opening process is reexecuted.

4. The power supply device for arc welding (30) according to any one of claims 1 to 3, wherein a raising rate of the welding current in the short-circuit state increases every time the constrained short-circuit opening process is reexecuted.

5. An arc welding system (1) comprising:
a plurality of welding robots (10, 10A, 10B) that perform welding on a same workpiece; and
a plurality of power supply devices (30) that respectively supply welding power to the plurality of welding robots (10, 10A, 10B), each of the plurality of power supply devices (30) being the power supply device for arc welding (30) according to any one of claims 1 to 4.

6. A control method of a power supply device for arc welding (30) that performs welding on a workpiece while repeatedly changing a short-circuit state between a consumable electrode and the workpiece and an arc state where an electric arc exists between the consumable electrode and the workpiece, the control method comprising:
reducing, when a change amount of a welding voltage becomes not less than a predetermined threshold while raising a welding current between the consumable electrode and the workpiece in the short-circuit state, the welding current for a predetermined time interval to execute a constrained short-circuit opening process for opening the short-circuit state; and
reexecuting the constrained short-circuit opening process after the constrained short-circuit opening process is executed.
